# EUROPEAN PATENT APPLICATION

(11) **EP 2 191 728 A1**
(43) Date of publication of application: **02.06.2010**
(21) Application number: 08020654.3
(22) Date of filing: 27.11.2008
(51) Int. Cl.: A23B 7/02, A23B 7/06, A23B 7/148, A23L 1/28, B65B 25/04

(54) **Method for treating mushrooms and a system for performing the same**

(71) Applicant: Lenssen Vul- en Sluittechniek BV, 5975 RJ Sevenum (NL)
(72) Inventor: Lenssen, Mart E.P.J., 5975 RJ Sevenum (NL)
(74) Representative: Wiebusch, Manfred

(57) **Abstract**

The present invention pertains to a method for treating mushrooms comprising evacuating the mushrooms to remove at least part of the air contained in the mushrooms, treating the mushrooms in a water based medium to replace the removed air by a water based fluid, cutting the treated mushrooms in slices, and blanching the mushroom slices, wherein the slices are blanched with steam. The invention also pertains to a system for performing the said method.

## Description

The present invention pertains to a method for treating mushrooms comprising evacuating the mushrooms to remove at least part of the air contained in the mushrooms, treating the mushrooms in a water based medium to replace the removed air by a water based fluid, cutting the treated mushrooms in slices, and blanching the mushroom slices. The invention also pertains to a system for performing this method.

Such a method has been suggested in European patent application EP 0 564 026, assigned to Oostvogels. The Oostvogels patent pertains a method for packing mushrooms. In an embodiment of this method the mushrooms, in particular champignons, before they are being sliced, are subjected to a treatment wherein the mushrooms are evacuated to remove the air contained therein. Thereafter, the mushrooms are treated in a water based medium, in particular water optionally containing additives such as preservatives and pH regulators, to replace the removed air by water. Advantageously, the mushrooms are subjected to the vacuum treatment in an aqueous medium such that the removing of the air and the replacement by water take place in essence simultaneously, or at least during the same process step. Such treatment is common in the art of treating mushrooms and many embodiments of such treatment are known in the art or even commercially available. An embodiment of such a method is e.g. known form Dutch patent application NL 9002367, assigned to Lubot & Wakker Engineering BV. By using any of these known methods the air, i.e. the gaseous medium contained in the mushroom before the evacuation step, in particular normal atmospheric air, is removed almost completely from the mushrooms and preferably replaced almost completely by a water based fluid, which fluid may contain additives such as preservatives, proteins, minerals etc. By replacing the air in the mushroom by a water based fluid, the heat conduction capabilities of the mushroom are significantly improved, which enables e.g. a quicker blanching process. Before blanching, the mushrooms are sliced. Then the blanching, i.e. a heat treatment to cook the mushrooms to a certain degree and at the same time ensure that bacteria present in the mushroom are killed or at least rendered less active, takes place in an aqueous medium, typically water at boiling temperature. After blanching, the mushroom slices are cooled to ambient temperature.

The known method has an important disadvantage. It takes a lot of energy to treat the mushrooms and also, the amount of waste water is enormous. The latter also corresponds to a great amount of wasted energy since the waste water leaves the process at a high temperature.

It is an object to the present invention to treat mushrooms with a significantly reduced amount of energy needed per ton of mushrooms. To this end, a method according to the preamble has been devised, **characterised in that** the slices are blanched with steam. Surprisingly, applicant found that using steam leads to a reduced amount of energy needed per mass unit of mushrooms. This came as a surprise since it was generally understood that using steam costs more energy per mass unit of mushrooms. Steam namely has a significantly higher energy content per mass unit than water. Moreover, it is generally understood that the transfer of energy from steam to mushroom slices is less quick than from water to mushrooms slices (given the more intense contact between liquid water and a mushroom than between steam and a mushroom). Altogether, given the high energy costs, steam is only used for specific high end applications in the art of grocery treatments. The reason why in the present case the use of steam leads to a reduced amount of energy is not 100% clear. However, the fact that the mushrooms are evacuated, rehydrated and sliced might lead to mushroom surface that is very susceptible for heat extraction from steam. This would explain why the amount of energy needed is less than in the prior art method using boiling water for blanching, despite the fact that the generation of steam inherently costs a lot of energy.

It is noted that the blanching of mushrooms with steam is known from JP 2003 3393310. This method however pertains to the treatment of whole mushrooms, soaked in oil. This is a completely different treatment than evacuating and rehydrating the mushrooms after which they are sliced and blanched, and used for high end application of the oiled mushrooms. In this particular case energy is not an issue. Moreover, steam is preferably used for whole mushrooms since when using boiling water, the energy transfer is too high at the surface of the mushroom. Given the longer blanching time, a too intense energy transfer at the surface would mean that the outer part would be over-cooked. For mushroom slices, this problem does not exist and therefore boiling water is commonly used for blanching.

In an embodiment of the present invention the slices are blanched by bringing them in a substantially closed room containing steam at a predetermined pressure. This appears to lead to a blanching process than can be controlled relatively easy. In a substantially closed room, the pressure of the steam can be controlled with simple technical means as commonly known in the art. By keeping the pressure of the steam essentially at a predetermined value, it appears that the blanching process is very stable and repeatable. This guarantees a constant quality level which is important, in particular for high throughput systems.

In a further embodiment, the temperature of the mushroom slices immediately before entering the room is less than the boiling temperature of water at the predetermined pressure of the steam in the room. In this embodiment the blanching process is extremely quick. Apparently, by having the slices entering the room at a temperature slightly below the boiling temperature of water, the steam transfers the heat to the slices very efficiently. It is believed that the steam cools down on the surface of the slices under the formation of liquid water. With this condensation process a lot of energy is freed to enter the mushroom slices. This energy apparently is sufficient to quickly blanch the mushroom slices.

In another embodiment less than 60% of the air content of the mushroom is replaced by the water based fluid. A lower amount of water in the mushroom slices inherently means that more energy is saved: less mass has to be heated in the blanching process. However, lowering the amount of water decreases the energy transfer capacity of the mushroom. In theory, this could outweigh the energy saved. Therefore in the past, one typically chose to evacuate the mushrooms up to more than 90% and replace preferably all of the evacuated space with water. Surprisingly however, even when the amount of rehydrated water is less than 60% of the original air content of the mushroom, but preferably more than 15%, the heat transfer capacity of the mushroom slices still appears to be at a sufficient level when blanching with steam. Apart from the further energy savings, a very important second advantage of this embodiment is that less water leaves the mushrooms while being blanched. Less of this water means less waste. Moreover, the amount of mushroom constituents (such as proteins and minerals) in the waste water is at a far higher concentration than in the prior art method wherein the slices are blanched in boiling water. This means that the waste water can be conveniently used as a source of mushroom constituents. Although straightforward as such, it is noted that to reach an amount of rehydration less then 60%, one could chose several ways to arrive there. For example, one could choose a less high vacuum (to simply extract less air from the mushroom) or a faster throughput of mushrooms (to replace less of the removed air by the rehydration water) or a combination of both. This way, rehydration levels between 0 and 95% can be easiliy obtained. The exact value obtained can be easily determined by comparing the weight increase of the (partly) rehydrated mushrooms (according to the embodiment of the present invention) with the maximum weight increase that can be obtained with the prior art methods wherein substantially all air in the mushrooms is replaced by water. It is noted that different types of mushrooms may require different settings to obtain a predetermined amount of rehydration. The correct settings can be found by routine experimentation and may vary depending on the desired properties (colour, taste, structure etc.) of the blanched mushrooms.

In a preferred embodiment between 20 and 40%, for example around 30% or 35% of the air content of the mushroom is replaced by the water based fluid. It appears that in this particular embodiment the heat transfer capacity is still high enough for a quick blanching process. Given the very low amount of rehydrated water, in this embodiment the waste water has a very high concentration of mushroom constituents and can be directly used in several processes such as the production of vegetable juice.

In an even more preferred embodiment the water that contains mushroom constituents is used to constitute the water based medium. In this embodiment there is no waste, all water (with mushroom constituents therein) being formed during the blanching process is used in the basic process step of rehydrating the mushroom after evacuation. This even improves the quality (taste) of the end products since virtually all mushroom constituents are being recycled into the mushroom slices themselves.

In another embodiment the blanched mushrooms undergo a further treatment chosen out of packing as such, freezing combined with packing and a heat treatment combined with packing. In the latter case, one could chose for pasteurisation or sterilisation depending on the time between the treatment and the consumption of the mushroom slices.

The invention also pertains to a system for performing a method as described hereabove, the system comprising a unit for evacuating and rehydrating mushrooms (wherein this unit may be composed of separate sub-units, e.g. one sub-unit for evacuating the mushrooms and one for rehydrating them), transporting means for transporting the rehydrated mushrooms to a cutting machine for cutting the mushrooms in slices, second transporting means for transporting the sliced mushrooms through a substantially closed steaming room in which steam can be kept at a predetermined pressure.

In an embodiment the cutting machine comprises a first and a second axle, each provided with multiple circular cutting blades, wherein neighbouring blades on each axle are being spaced at a distance substantially equal to the thickness equal to the thickness of two mushroom slices, wherein the axles run parallel at a distance such that the blades partly overlap each other, the blades being arranged such that a blade provided on either the first or second axle is neighboured by two blades provided on the other axle. It appears that this cutting machine is very suitable to cut the evacuated and rehydrated mushrooms. Such mushrooms namely are very brittle and upon cutting, such mushrooms are easily crushed. By using the cutting device of this embodiment, nice and thin slices can be cut from evacuated and rehydrated mushrooms.

In another embodiment of the system according to the invention the steaming room has a first opening for introducing the mushroom slices in the room and a second opening for taking the blanched mushroom slices out of the room, at least one of the openings being closed by a curtain of fluid water. It appears that a curtain of fluid water can be used to keep the steam inside the room, even if a pressure above atmospheric is used. The mushroom slices can be easily conveyed through such a water curtains e.g. on a conveyer belt or conveyor channel that runs into the room.

The invention will be further explained by describing the following particular embodiment of a system and method according to the invention.
- Figure 1: shows a schematic overview of a treatment process according to the invention.
- Figure 2: shows a side view of the cutting and blanching units in a system for performing the invention.
- Figure 3: is a detailed view of the cutting machine of example 2.
- Example 1: gives a calculation of savings obtainable with present invention.

### Figure 1

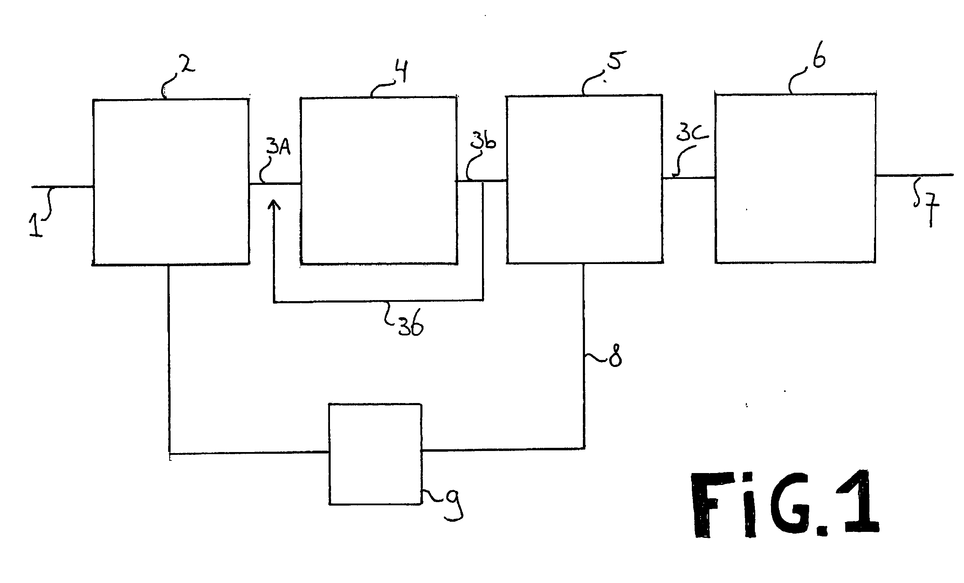

Figure 1 shows a schematic overview of a treatment process according to the invention. The process starts with the supply (1) of washed whole mushrooms to unit 2. In unit 2 the mushrooms are evacuated and rehydrated with a water based fluid that arrives from reservoir 9. In this case the unit is an evacuate and rehydrate unit as known from Dutch patent application NL 9002367. Settings are such that about 45% of the air content of the mushroom is replaced by the water based fluid. After this process step, the mushrooms are transported (3A) to a cutting unit 4. In this unit the whole mushrooms are cut into slices. After that, the slices are transported (3B) to blanching unit 5. The water that is used for transporting the mushroom slices is recirculated via line 36 to transport section 3A. In unit 5 the slices are blanched with steam to preserve the mushroom slices and improve their structure and taste. For this, the slices are fed in a room that contains steam at a pressure slightly above atmospheric, typically 1% above the local atmospheric pressure, at a temperature slightly above 100 degrees Celsius, typically 2 degrees above the boiling temperature of water at the pressure in the blanching room. With the blanching, blanching fluid leaves the mushroom. This fluid contains mushroom constituents such as proteins, saccharides and flavour molecules. This fluid, possibly together with some condensed steam, forms a blanching fluid that comes free during this blanching step. This fluid leaves the blanching unit 5 via line 8. It is temporarily stored in reservoir 9 until it is transported to unit 2 and used for rehydrating fresh evacuated whole mushrooms. Temporarily storing the blanching fluid in reservoir 9 provides the opportunity to control the quality and constitution of the blanching fluid before it is recirculated back in the process. The blanched slices leave the blanching unit (3C) to be transported to after treatment unit 6. In this unit, in this particular example, the slices are cooled and packed. The packages leave unit 6 via transport means 7.

### Figure 2

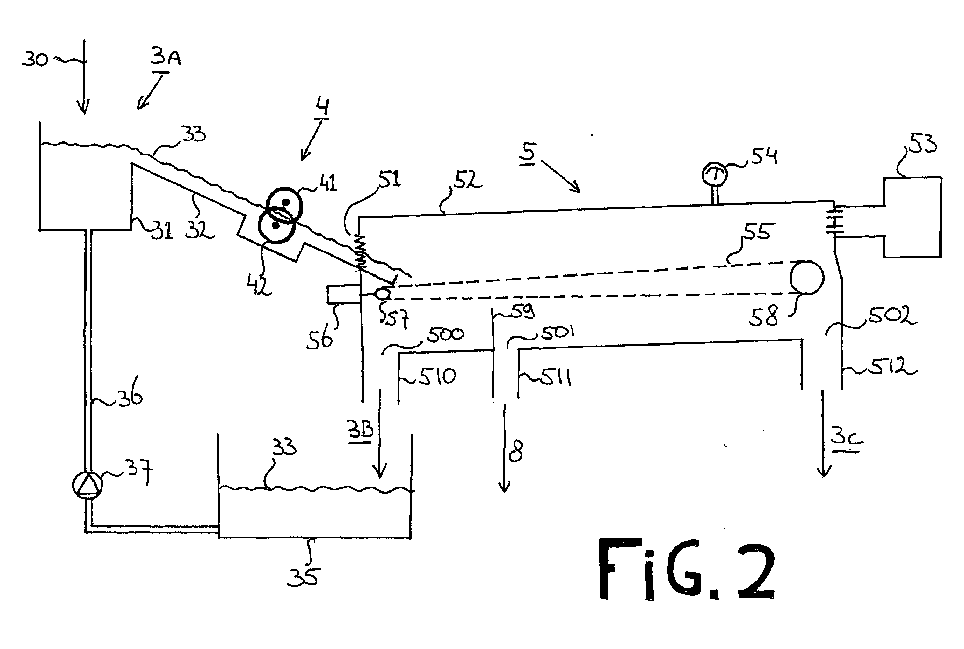

Figure 2 shows a side view of the cutting and blanching units in a system for performing the invention. This part of the system comprises a reservoir 31 that forms part of the transporting unit 3A. This reservoir 31 is filled with transporting water 33, which water has a temperature of around 98 degrees celsius. Into this reservoir rehydrated whole mushrooms are fed (indicated with arrow 30). These mushrooms leave reservoir 31 via inclined channel 32. In this channel the mushrooms form a single layer. Due to the inclination, the mushrooms float through the channel with their rounded heads pointed at cutting knives 41 and 42 (forming part of cutting unit 4). There stems are pointed at the reservoir 31. The mushrooms are forced through the knives and sliced. Due to the force of the flowing water, the slices remain in the channel as individual slices and do not stick to each other. The slices are transported further to the blanching unit 5 which has as a basic part blanching room 52. The slices are heated in the transport water 33 to a temperature of about 98 degrees Celsius. The slices enter the blanching room 52 through a curtain of fluid water 51. This water curtain serves to keep the steam inside the blanching room. The blanching room is provided with a steam unit 53 and control unit 54. This way, the pressure is kept about 1% above atmospheric to try and prevent contamination from the exterior environment. The temperature is kept at 2 degrees above the boiling temperature of water at this pressure. Since steam is lighter than air, the steam will not leave the room via bottom openings 500, 501 and 502. The slices enter the room at about 98 degrees and reach perforated belt 55. The transport water 33 immediately runs through the belt and leaves the blanching room via opening 500 through channel 510. Then this water enters reservoir 35 and is pumped back to reservoir 31 by pump 37 through line 36. In the mean time, the steam in the blanching room condensates on the mushroom slices that lie on belt 55 since these slices have a temperature below the condensation temperature of water at that pressure (which in essence is the same as the boiling temperature at that pressure). With the condensation, a large amount of heat comes free and is absorbed by the mushroom slices. This heat is enough to extremely quick and efficient blanch the mushroom slices, despite the fact that the heat transfer between steam and slices as such is not too high. The belt is driven by motor 56 and rotates around axes 57 and 58. The belt runs at a speed such that the first blanching fluid drips of the slices when these have been transported about half-way of the distance to axle 58. The blanching fluid runs through the belt and reaches the bottom of the blanching room. This room is slightly inclined such that the fluid flows back to opening 501. In order to make sure no or at least little blanching fluid contaminates the transport water, the bottom of the room is provided with an edge 59. The blanching fluid is led through channel 511 and transported further (8) as indicated under example 1. The blanched slices ultimately fall off the belt 55 when they reach axle 58. They fall through opening 502 and are led through channel 512 to be transported further (3C).

### Figure 3

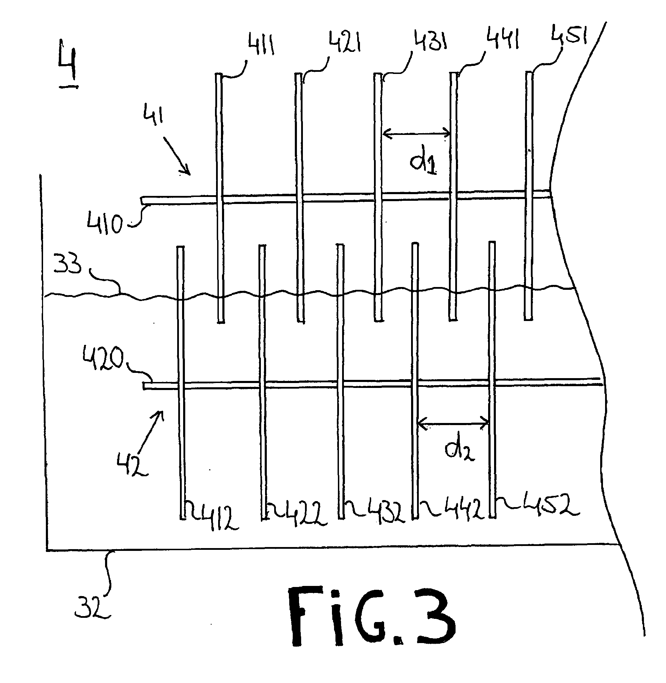

Figure 3 is a detailed, schematic view of the cutting machine of figure 2. Knive 41 comprises an axle 410 and multiple cutting blades 411, 421, 431, 441, 451 etc. Neighbouring blades are placed at a distance d1, which is substantially equal to the thickness of two mushroom slices. Parallel to axle 410 runs axle 420, which is part of knive 42, and also carries multiple cutting blades, viz. blades 412, 422, 432, 442, 452 etc. Neighbouring blades on axle 42 are placed at a distance d2 which is in essence equal to d1. In tangential direction the two rows of cutting blades overlap. It is at this overlap position that the mushrooms are fed. This is accomplished by keeping the level of the transport water 33 such that it runs at the same height were the cutting blades overlap (as indicated in figure 3). The rotating directions of the two axles are opposite such that a nice cutting action of the mushrooms is provided without squeezing them. Given the arrangement, the distance between two cutting blades is exactly the width that is correct for one mushroom slice. In general such a cutting machine is routinely used in the art of treating and preserving mushrooms, and such a machine can be obtained from various commercial sources. However, in the prior art the mushrooms are transported to the cutting blades via a through (channel) having multiple sub-channels, each sub-channel has a width such that at most one mushroom will fit in it. This way, the sub-channels will feed lines of individual mushrooms. The idea is that this way mushrooms and mushroom slices will not stick to each other. Applicant however found that the prior art multi sub-channel way of supply has an important drawback: the blades do not wear evenly since the mushrooms arrive at the blades at exactly the same location over-and-over again: this means that the blades will not wear evenly. This problem has been solved by using one big channel 32 wherein the mushrooms are fed to the blades randomly. The problem of sticking of the mushrooms or slices does not occur since the channel is inclined. By having the inclination there is enough feeding force of the transport water. This way, the sub-channels can be dispensed with and the blades wear evenly.

### Example 1

Significant amounts of resources can be saved by applying a method according to the invention, despite the general believe that using steam increases the amount of energy needed for blanching mushrooms. Based on the results obtained, it is estimated that about 40% of the amount of energy can be saved. At a cost of about 15 euros per ton mushrooms, and estimating that the total production of preserved sliced mushrooms in the Netherlands at 200.000 tons per year, about 1.2 million euros on energy can be saved. With regard to waste water, about 70% can be saved since almost all blanching water can be re-used in the process. At the current cost of about 2 euros for the waste water for each ton of mushroom slices, this provides a savings of about 280 thousand euros. Also, apart from the better taste of the slices due to a shorter blanching process, the mushrooms will shrink a little less, typically about 2% will be saved. At a price of 700 euros per ton, this is a savings of about 2.8 million euros. In total, for the Dutch industry only, a savings of about 4.5 million euros can thus be obtained.

## Claims

1. Method for treating mushrooms comprising evacuating the mushrooms to remove at least part of the air contained in the mushrooms, treating the mushrooms in a water based medium to replace the removed air by a water based fluid, cutting the treated mushrooms in slices, and blanching the mushroom slices, **characterised in that** the slices are blanched with steam.

2. A method according to claim 1, **characterised in that** the slices are blanched by bringing them in a substantially closed room (52) containing steam at a predetermined pressure.

3. A method according to claim 2, **characterised in that** the temperature of the mushroom slices immediately before entering the room (52) is less than the boiling temperature of water at the predetermined pressure of the steam in the room (52).

4. A method according to any of the preceding claims, **characterised in that** less than 60% of the air content of the mushroom is replaced by the water based fluid.

5. A method according to claim 4, **characterised in that** between 20 and 40% of the air content of the mushroom is replaced by the water based fluid.

6. A method according to any of the preceding claims, wherein water which contains mushroom constituents leaves the slices while they are being blanched, **characterised in that** the said water is used to constitute the water based medium that is used to replace the removed air as mentioned in claim 1.

7. A method according to any of the preceding claims, **characterised in that** the blanched mushrooms undergo a further treatment chosen out of packing as such, freezing combined with packing and a heat treatment combined with packing.

8. A system for performing a method according to any of the claims 1 to 7 comprising a unit for evacuating and rehydrating mushrooms (2), transporting means (3A) for transporting the rehydrated mushrooms to a cutting machine (4) for cutting the mushrooms in slices, second transporting means (3b) for transporting the sliced mushrooms through a substantially closed steaming room (52) in which steam can be kept at a predetermined pressure.

9. A system according to claim 9, **characterised in that** the cutting machine (4) comprises a first (410) and a second axle (420), each provided with multiple circular cutting blades (411, 421, 431, 441, 451, 412, 422, 432, 442, 452) wherein neighbouring blades on each axle are being spaced at a distance substantially equal to the thickness equal to the thickness of two mushroom slices, wherein the axles run parallel at a distance such that the blades partly overlap each other, the blades being arranged such that a blade provided on either the first or second axle is neighboured by two blades provided on the other axle.

10. A system according to any of the claims 9 or 10, **characterised in that** the steaming room (52) has a first opening (51) for introducing the mushroom slices in the room (52) and a second opening (502) for taking the blanched mushroom slices out of the room (52), at least one of these openings being closed by a curtain of fluid water.
